# EUROPÄISCHE PATENTANMELDUNG

(11) **EP 0 982 246 A1**
(43) Veröffentlichungstag der Anmeldung: **01.03.2000**
(21) Anmeldenummer: 99116249.6
(22) Anmeldetag: 18.08.1999
(51) Int. Cl.: B65G 21/22, B65G 17/08

(54) **Gebindetransportanlage**

(30) Priorität: 18.12.1998 DE 29822466 U; 22.08.1998 DE 29815087 U; 22.08.1998 DE 29815102 U
(71) Anmelder: Krones AG, D-93063 Neutraubling (DE)
(72) Erfinder: Ternes, Klaus, 93053 Regensburg (DE)

(57) **Zusammenfassung**

Gebindetransportanlage mit wenigstens einem kurvenförmigen, eine kurvengängige Kunststoffscharnierbandkette (14) mit magnetisierbaren oder magnetischen Materialbestandteilen und/oder aus solchem Material bestehenden Gelenkbolzen aufweisenden Förderabschnitt (1) mit einem eigenen Antrieb (3), wobei dieser Förderabschnitt (1) einen Haltemagneten besitzenden Kurvenführungskörper (10) mit einer Nut (11) zum Aufnehmen und seitlichen Führen der Scharniergelenke aufweist, und wenigstens einem weiteren, dem kurvenförmigen Förderabschnitt (1) vor- und/oder nachgeordneten geraden Förderabschnitt (2) mit einer geradelaufenden Kunststoffscharnierbandkette (15) und einem eigenen Antrieb (23), wobei dieser Förderabschnitt (2) zum Aufnehmen und seitlichen Führen der Scharniergelenke seiner geradelaufenden Scharnierbandkette (15) zwei parallel verlaufende Gleitleisten (12) aufweist, deren gegenseitiger Zwischenabstand ein mit der Nut (11) des Kurvenführungskörpers (10) übereinstimmendes Maß (A) aufweist.

## Beschreibung

Die Erfindung betrifft eine Gebindetransportanlage gemäß dem Oberbegriff des Anspruchs 1.

Derartige Gebindetransportanlagen werden beispielsweise in Getränkeabfüllanlagen zum Transportieren von Flaschenkästen, Kartons, Trays oder dgl. verwendet, wobei in der Regel für Einweggebinde Kunststoffscharnierbandketten bzw. Röllchenketten in Kunststoffausführung zum Einsatz kommen. Eine komplette Transportanlage besteht üblicherweise aus mehreren einzelnen, entweder geraden oder gekrümmten Transporteuren mit jeweils einem eigenen Antrieb.

Bei den gekrümmten, d.h. eine Kurve beschreibenden Transporteuren werden in jüngerer Zeit zunehmend zum Tragen und seitlichen Führen der kurvengängigen Scharnierbandketten Kurvenführungskörper mit einer eingeformten Nut für die Scharniergelenke verwendet, die mit Haltemagneten bestückt sind und dadurch Scharnierbandketten aus magnetischem oder magnetisierbarem Material und/oder mit Scharniergelenkbolzen aus derartigem Material zuverlässig mit der Nut in Eingriff halten können.

Die geradelaufenden Transporteure besitzen zum Tragen und Führen ihrer Scharnierbandkette zwei mit Abstand in Förderrichtung parallel verlaufende Gleitleisten auf ihrem Traggestell. Bei den bisherigen geradelaufenden Gebindetransporteuren wurde für den Abstand der zueinander weisenden Führungsflächen der parallelen Gleitleisten ein von der Nutbreite im Kurvenführungskörper der gekrümmten Gebindetransporteure abweichendes Maß verwendet. Aufgrund dessen mussten mehrere Bauteile des Traggestells verschieden ausgeführt werden, je nachdem, ob sie für einen geraden oder gekrümmten Transporteur bestimmt waren, obwohl in beiden Fällen die Traggestellgrundkonstruktion sehr ähnlich aufgebaut war. Dieser Umstand verursacht beim Hersteller der Transporteure zusätzliche Kosten bei der Herstellung, Lagerhaltung und Montage.

Demzufolge liegt der Erfindung die Aufgabe zugrunde, eine Vereinfachung anzugeben.

Gelöst wird diese Aufgabe durch die kennzeichnenden Merkmale des Anspruchs 1.

Durch die erfindungsgemäße Vereinheitlichung können nun zahlreiche Bauteile der Transporteure standardisiert werden, ganz gleich, ob sie später für einen geraden oder gekrümmten Transporteur benötigt werden. Daraus resultieren höhere Losgrößen mit geringeren Herstellkosten.

Weitere vorteilhafte Ausgestaltungen der Erfindung sind Gegenstand der Unteransprüche.

Nachfolgend wird ein Ausführungsbeispiel anhand der Figuren erläutert. Es zeigt:
- Fig. 1: eine aus einem gekrümmten Transporteur 1 und einem geraden Transporteur 2 bestehende Gebindetransportanlage in einer schematischen Draufsicht,

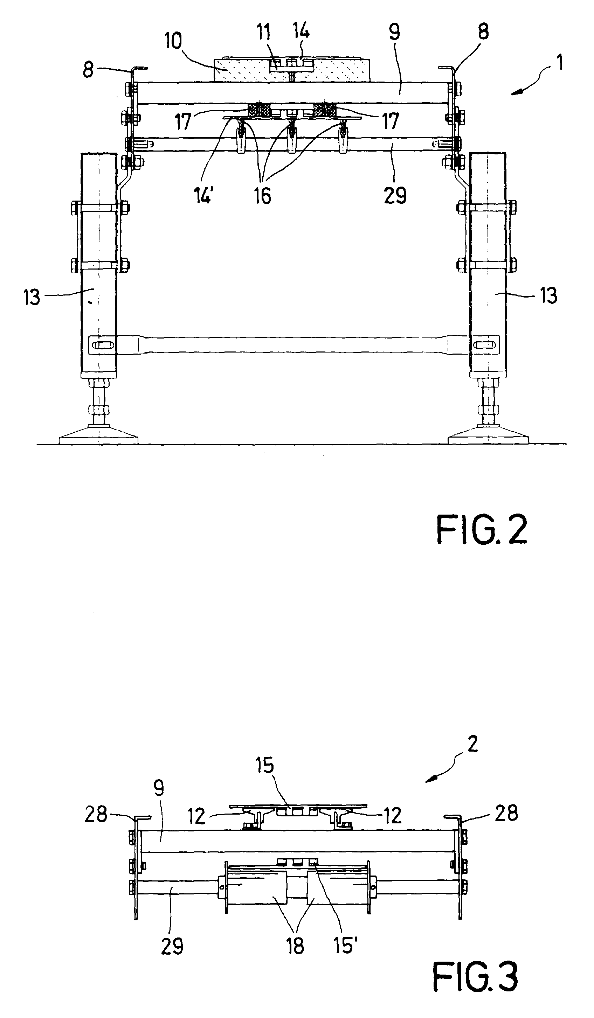

- Fig. 2: einen Vertikalschnitt durch den gekrümmten Transporteur 1 entlang der Linie C-C in Fig. 1 und
- Fig. 3: einen Vertikalschnitt durch das Oberteil des geraden Transporteurs 2 entlang der Linie B-B in Fig. 1.

Beide Transporteure 1 u. 2 verfügen an ihrem stromaufwärtigen Ende über einen eigenen elektromotorischen Antrieb 3 bzw. 23, der eine Antriebswelle 4 bzw. 24 mit einem verdrehfesten Antriebsrad 5 bzw. 25 beaufschlagt. Am gegenüberliegenden stromabwärtigen Ende des jeweiligen Transporteurs befindet sich eine Achse 6 bzw. 26 mit einem frei drehbaren Umlenkrad 7 bzw. 27. Die genannten Antriebswellen und Achsen sind an mit Abstand gegenüberliegenden Wangen 8 bzw. 28 gelagert oder befestigt, wobei die Wangen durch mehrere beabstandete, in jeweils einer Ebene liegende Quertraversen 9 bzw. 29 verbunden sind und von Standbeinen 13 getragen werden.

Auf den Quertraversen 9 des gekrümmten Transporteurs 1 ist ein mit einer vertieft eingeformten Nut 11 ausgestatteter Kurvenführungskörper 10 befestigt. Entlang dieser Nut 11 befinden sich mehrere nicht dargestellte Magnete. Die Magnete haben die Aufgabe, die Scharniergelenke der Scharnierbandkette 14 berührungslos in der Nut 11 zu halten. Kunststoffketten besitzen deshalb Scharniergelenkbolzen aus einem magnetischen oder magnetisierbaren Metall.

Die eine Breite A aufweisende Nut 11 wird durch parallele, in den geraden Abschnitten des Transporteurs 1 dem Kurvenführungskörper 10 vor- und nachgeordnete Gleitleisten 12 verlängert, die zusammen mit der Nut 11 die Scharniergelenke der kurvengängigen Scharnierbandkette 14 aufnehmen und seitlich führen, während die Unterseite des Obertrums der Kette 14 auf den Gleitleisten 12 bzw. dem Kurvenführungskörper 10 aufliegt.

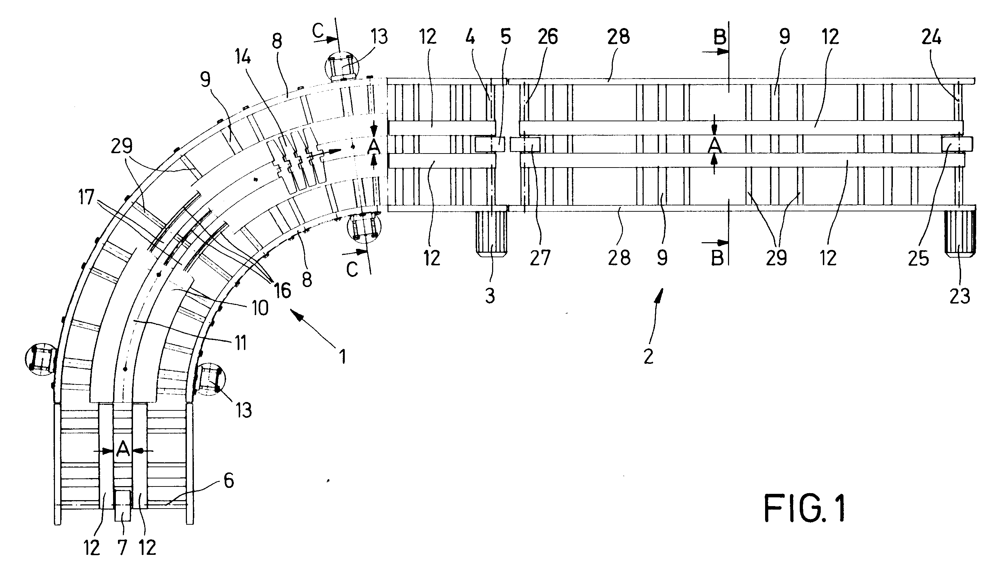

Auch auf den Quertraversen 9 des geraden Transporteurs 2 sind für den gleichen Zweck mit übereinstimmendem Zwischenabstand A parallel verlaufende Gleitleisten 12 schnellwechselbar auf Winkeleisen befestigt. Während auf dem Transporteur 2 eine in Fig. 1 nicht dargestellte geradelaufende Scharnierbandkette 15 zum Einsatz kommt, ist der Transporteur 1 mit einer kurvengängigen Ausführung 14 bestückt. Beide Endlosketten 14, 15 besitzen jedoch eine zumindest annähernd übereinstimmende Gelenkbreite, insbesondere ca. 57 mm. Das genannte Maß A beträgt bevorzugt ca. 60 Millimeter.

Die tieferliegenden Quertraversen 29 dienen zum Unterstützen der Untertrume 14', 15' der Scharnierbandketten 14, 15, die in den geraden Abschnitten auf frei drehbaren Rollen 18 und in den gekrümmten Abschnitten von Gleitleisten 16 getragen werden.

Im gekrümmten Abschnitt sind zur seitlichen Führung der Scharniergelenke des Untertrums 14' zusätzlich ebenfalls einen Zwischenabstand A aufweisende bogenförmige Führungsleisten 17 vorhanden, die parallel verlaufend an der Unterseite der Quertraversen 9 befestigt sind

Abweichend von den Figuren können die Kunststoffscharnierbandketten an ihrer Tragfläche mit frei drehbaren Röllchen ausgestattet sein. Derartige Röllchenketten sind zum Transportieren empfindlicher Gebinde, wie z.B. in Kunststofffolie eingeschlagene Trays, von Vorteil.

## Patentansprüche

1. Gebindetransportanlage mit wenigstens einem kurvenförmigen, eine kurvengängige Kunststoffscharnierbandkette (14) mit magnetisierbaren oder magnetischen Materialbestandteilen und/oder aus solchem Material bestehenden Gelenkbolzen aufweisenden Förderabschnitt (1) mit einem eigenen Antrieb (3), wobei dieser Förderabschnitt (1) einen Haltemagneten besitzenden Kurvenführungskörper (10) mit einer Nut (11) zum Aufnehmen und seitlichen Führen der Scharniergelenke aufweist, und wenigstens einem weiteren, dem kurvenförmigen Förderabschnitt (1) vor- und/oder nachgeordneten geraden Förderabschnitt (2) mit einer geradelaufenden Kunststoffscharnierbandkette (15) und einem eigenen Antrieb (23), wobei dieser Förderabschnitt (2) zum Aufnehmen und seitlichen Führen der Scharniergelenke seiner geradelaufenden Scharnierbandkette (15) zwei parallel verlaufende Gleitleisten (12) aufweist, deren gegenseitiger Zwischenabstand ein mit der Nut (11) des Kurvenführungskörpers (10) übereinstimmendes Maß (A) aufweist.

2. Gebindetransportanlage nach Anspruch 1, dadurch gekennzeichnet, dass die zueinander weisenden Innenkanten der Gleitleisten (12) mit den seitlichen Führungsflächen der Nut (11) in Förderrichtung fluchtend angeordnet sind.

3. Gebindetransportanlage nach Anspruch 1 oder 2, dadurch gekennzeichnet, dass im kurvenförmigen Förderabschnitt (1) dem Kurvenführungskörper (10) gerade, mit Zwischenabstand (A) parallel verlaufende Gleitleisten (12) vor- und/oder nachgeordnet sind, deren Innenkanten mit den seitlichen Führungsflächen der Nut (11) des Kurvenführungskörpers (10) fluchten.

4. Gebindetransportanlage nach Anspruch 3, dadurch gekennzeichnet, dass der kurvenförmige Förderabschnitt (1) ein Traggestell für den Kurvenführungskörper (10) und die Gleitleisten (12) aufweist, das im wesentlichen aus zwei zumindest abschnittsweise gekrümmten, äquidistant angeordneten Wangen (8) und diese an ihren zueinander weisenden Flächen verbindenden Quertraversen (9, 29) besteht.

5. Gebindetransportanlage nach Anspruch 1 oder 2, dadurch gekennzeichnet, dass der gerade Förderabschnitt (2) ein die Gleitleisten (12) aufnehmendes Traggestell aufweist, das aus zwei mit Abstand parallel angeordneten Wangen (28) und diese an ihren zueinander weisenden Flächen verbindenden Quertraversen (9, 29) besteht.

6. Gebindetransportanlage nach Anspruch 4 oder 5, dadurch gekennzeichnet, dass die Quertraversen (9, 29) in zwei höhenmäßig versetzten Ebenen angeordnet sind, wobei die in einer ersten Ebene angeordneten oberen Quertraversen (9) den Kurvenführungskörper (10) und/oder die Gleitleisten (12) tragen, während die in einer tiefer liegenden Ebene angeordneten unteren Quertraversen (29) das Untertrum (14', 15') der Scharnierbandkette (14, 15) stützen.

7. Gebindetransportanlage nach Anspruch 6, dadurch gekennzeichnet, dass die oberen Quertraversen (9) einen Querschnitt mit einer ebenen Oberseite, insbesondere Vierkantquerschnitt, und die unteren Quertraversen (29) einen runden Querschnitt aufweisen.

8. Gebindetransportanlage nach Anspruch 7, dadurch gekennzeichnet, dass die unteren Quertraversen (29) im kurvenförmigen Förderabschnitt (1) Stützleisten (16) und im geraden Förderabschnitt (2) frei drehbare Stützrollen (18) für das Untertrum (14', 15') der jeweiligen Scharnierbandkette (14, 15) tragen.

9. Gebindetransportanlage nach Anspruch 7, dadurch gekennzeichnet, dass die unteren und oberen Quertraversen (9, 29) sowohl in kurvenförmigen als auch geraden Förderabschnitten (1, 2) gleich ausgebildet sind.

10. Gebindetransportanlage nach wenigstens einem der Ansprüche 1 bis 9, dadurch gekennzeichnet, dass die Gleitleisten (12) als Verschleißprofile ausgebildet sind, die lösbar auf mit den Quertraversen (9) verbundenen Winkelprofilen befestigt sind.

11. Gebindetransportanlage nach wenigstens einem der Ansprüche 1 bis 10, dadurch gekennzeichnet, dass das Maß (A) zwischen den Innenkanten der parallelen Gleitleisten (12) annähernd 60 Millimeter beträgt.

12. Gebindetransportanlage nach wenigstens einem der vorhergehenden Ansprüche 1 bis 11, dadurch gekennzeichnet, dass die Scharnierbandketten frei drehbare Röllchen auf ihrer Tragseite aufweisen.
